# EUROPÄISCHE PATENTSCHRIFT

(11) **EP 4 137 361 B1**
(45) Veröffentlichungstag und Bekanntmachung des Hinweises auf die Patenterteilung: **30.10.2024**
(21) Anmeldenummer: 22201329.4
(22) Anmeldetag: 24.06.2019
(51) Int. Cl.: B60P 1/64, G01G 19/08, B62D 33/04

(54) **NUTZFAHRZEUG, VORZUGSWEISE LASTKRAFTWAGEN, MIT AUFBAU UND GEWICHTSMESSSENSOREN**
COMMERCIAL VEHICLE, PREFERABLY HEAVY GOODS VEHICLE, WITH BODY AND WEIGHT MEASURING SENSORS
VÉHICULE UTILITAIRE, DE PRÉFÉRENCE CAMION, DOTÉ D'UNE STRUCTURE ET DE CAPTEURS DE MESURE DE POIDS

(30) Priorität: 18.07.2018 DE 102018117352
(43) Veröffentlichungstag der Anmeldung: 22.02.2023
(62) Teilanmeldung aus: 19181909.3
(73) Patentinhaber: MAN Truck & Bus SE, 80995 München (DE)
(72) Erfinder: PETER, Andreas, 85375 Neufahrn (DE); ARTMAIER, Wolfgang, 80935 München (DE)
(74) Vertreter: v. Bezold & Partner Patentanwälte - PartG mbB

(56) Entgegenhaltungen:
- DE-A1- 10 334 708
- DE-A1- 102011 080 245
- DE-A1- 102016 219 176
- DE-U1- 202007 002 646
- GB-A- 2 043 921

## Beschreibung

Die Erfindung betrifft ein Nutzfahrzeug, vorzugsweise einen Lastkraftwagen, mit einem Aufbau, einem Fahrzeugrahmen und Gewichtsmesssensoren.

Aus der DE 20 2007 002 646 U1 ist eine in Fahrzeugen eingebaute Waage für Frachtgut bekannt. Wiegedaten einer Fracht können mittels Sensoren und einem elektronischen Datensammler über ein Anzeigeinstrument angezeigt werden.

Die DE 10 2011 080 245 A1 betrifft ein Verfahren zur Überwachung einer Zuladung auf einer Ladefläche eines Fahrzeugs, wobei das Verfahren einen Schritt des Ermittelns einer Zuladungsinformation der Zuladung auf der Ladefläche mittels zumindest eines Gewichtssignals aufweist. Das Gewichtssignal repräsentiert ein Signal eines an der Ladefläche angeordneten Gewichtssensors.

Die DE 10 2016 219 176 A1 betrifft ein Transportfahrzeug oder einen Transportfahrzeugverbund mit einer Ladefläche und mit wenigstens einer Beladungserfassungseinheit, welche ausgebildet ist, ein Gewicht einer Beladung der Ladefläche zu erfassen.

Der Erfindung liegt die Aufgabe zu Grunde, eine alternative und/oder verbesserte Technik bezüglich einer Gewichtsmessung bei einem Nutzfahrzeug mit Aufbau zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Das Nutzfahrzeug ist vorzugsweise ein Lastkraftwagen. Das Nutzfahrzeug weist einen Aufbau zum Laden von Ladegut und einen Fahrzeughauptrahmen (z. B. umfassend mindestens zwei parallele Fahrzeughauptlängsträger oder eine andere Struktur, welche den Aufbau trägt) auf. An dem Fahrzeughauptrahmen ist eine Mehrzahl von Gewichtsmesssensoren (z. B. mit optischem, elektronischem und/oder mechanischem Wirkprinzip) vormontiert und zur Gewichtsmessung unterschiedlicher Abschnitte (z. B. Bodenabschnitte oder Hilfsrahmenabschnitte) des Aufbaus verteilt angeordnet (z. B. unter einem Boden des Aufbaus). Der Aufbau ist nachträglich auf den Fahrzeughauptrahmen mit der vormontierten Mehrzahl von Gewichtsmesssensoren aufgesetzt (z. B. auf die Gewichtsmesssensoren). Das Nutzfahrzeug weist eine Anzeigeeinrichtung auf. Die Anzeigeeinrichtung ist zur Anzeige von durch Gewichtsmessungen der Mehrzahl von Gewichtsmesssensoren ermittelten Beladungszuständen der unterschiedlichen Abschnitte des Aufbaus und/oder eines durch Gewichtsmessungen der Mehrzahl von Gewichtsmesssensoren ermittelten Ladungsschwerpunktes einer Beladung des Aufbaus und/oder von durch Gewichtsmessungen der Mehrzahl von Gewichtsmesssensoren ermittelten Achslasten des Nutzfahrzeugs ausgebildet (z. B. wird die Anzeigeeinrichtung zu einer solchen Anzeige entsprechend von einer Verarbeitungseinheit gesteuert).

Das Nutzfahrzeug bietet durch die Vormontage der Gewichtsmesssensoren am Fahrzeughauptrahmen die Möglichkeit, dass das Nutzfahrzeug mit identischer Struktur hinsichtlich Fahrzeughauptrahmen und Gewichtsmesssensoren für eine Vielzahl von unterschiedlichen Aufbauten verwendbar ist. Das Nutzfahrzeug kann betriebsbereit von einem Nutzfahrzeughersteller inklusive der vormontierten Gewichtsmesssensoren aufgebaut werden. Danach kann bspw. ein spezialisierter Aufbauhersteller irgendeinen vom Kunden gewünschten Aufbau auf den Fahrzeughauptrahmen aufsetzen. Durch Messungen der vormontierten Gewichtsmesssensoren können somit Beladungszustände in mehreren Abschnitten einer Vielzahl unterschiedlicher Aufbauten ermittelt werden. Es ist nicht notwendig, dass der Aufbauhersteller ein eigenes Beladungsmesssystem entwickelt und für jeden Aufbautyp anpasst.

Beispielsweise können die Gewichtsmesssensoren in den Fahrzeughauptrahmen integriert sein und/oder an einer Oberseite des Fahrzeughauptrahmens angeordnet sein. Es ist möglich, dass die Gewichtsmesssensoren fahrzeughauptrahmenfest ausgebildet sind.

Vorzugsweise können die Beladungszustände und/oder der Schwerpunkt mittels einer Verarbeitungseinheit ermittelt werden. Vorzugsweise kann die Verarbeitungseinheit in Kommunikationsverbindung mit den Gewichtsmesssensoren und/oder der Anzeigeeinrichtung stehen.

Es ist möglich, dass eine angezeigte Größe und/oder Anzahl der Bereiche von einem Benutzer einstellbar und/oder veränderbar ist. Zum Beispiel können mehrere Bereiche zur Vereinfachung zusammengelegt werden usw.

In einem Ausführungsbeispiel ist die Mehrzahl von Gewichtsmesssensoren aufbauunabhängig an dem Fahrzeughauptrahmen zur Verwendung mit einer Vielzahl von unterschiedlichen Aufbauten (z. B. umfassend offene Aufbauten (z. B. Kipper- und Muldenaufbauten) und/oder geschlossene Aufbauten (z. B. Kofferaufbauten)) zum nachträglichen Aufsetzen auf den Fahrzeughauptrahmen vormontiert. Alternativ oder zusätzlich ist der Aufbau aus einer Gruppe von einer Mehrzahl von Aufbauten, vorzugsweise von unterschiedlichen Aufbautypen, beispielsweise umfassend mindestens einen offenen Aufbau (z. B. Kipper- oder Muldenaufbau) und mindestens einen geschlossenen Aufbau (z. B. Kofferaufbau), ausgewählt, wobei vorzugsweise die Mehrzahl von Aufbauten zum Aufsetzen auf den Fahrzeughauptrahmen und zur Verwendung mit der Mehrzahl von Gewichtsmesssensoren ausgebildet ist.

In einem weiteren Ausführungsbeispiel ist die Mehrzahl von Gewichtsmesssensoren an Anbindungspunkten des Fahrzeughauptrahmens zum Aufbau angeordnet, vorzugsweise zumindest an vier äußeren Eckpunkten einer Anbindung des Aufbaus (zum Beispiel vorne und hinten; jeweils links und rechts, beispielsweise an zumindest sechs Anbindungspunkten (zum Beispiel vorne, mittig und hinten; jeweils links und rechts, optional bspw. zusätzlich mittig).

In einem weiteren Ausführungsbeispiel weist das Nutzfahrzeug eine elektrische oder elektronische Aufbau-Schnittstelle in Kommunikationsverbindung mit der Mehrzahl von Gewichtsmesssensoren zum Bereitstellen der Messsignale der Mehrzahl von Gewichtsmesssensoren mittels der elektrischen oder elektronischen Aufbau-Schnittstelle auf (z. B. direkt oder indirekt (z.B. verarbeitet oder weitergeleitet, z. B. durch Verarbeitungseinheit)). Dies ermöglicht, dass die Gewichtsmessungen bzw. Beladungszustände zu einer Verarbeitungseinheit des Aufbaus und/oder einer Anzeigeeinheit des Aufbaus übertragen werden. Damit kann der Aufbauhersteller beispielsweise typspezifisch eine oder mehrere Belader-Anzeigeeinheiten am oder im Aufbau oder Fahrzeug vorsehen, die entsprechend dem Typ des Aufbaus von einem Belader während eines typischen Beladungsvorgangs eingesehen werden können.

Beispielsweise kann die Aufbau-Schnittstelle vormontiert sein, zum Beispiel vom Hersteller des Nutzfahrzeugs, bevor der Aufbau auf den Fahrzeughauptrahmen, zum Beispiel vom Hersteller des Aufbaus, aufgesetzt wird.

Es ist möglich, dass die elektrische oder elektronische Aufbau-Schnittstelle in einem Fahrerhaus des Nutzfahrzeugs und/oder am Fahrzeughauptrahmen unterhalb des Aufbaus angeordnet ist.

In einem weiteren Ausführungsbeispiel weist die Anzeigeeinrichtung mindestens eine Belader-Anzeigeeinheit (z. B. fest installiert oder mobil) auf, die außerhalb eines Fahrerhauses des Nutzfahrzeugs, vorzugsweise sichtbar für einen den Aufbau beladenden Belader, angeordnet ist.

In einer Weiterbildung steht die mindestens eine Belader-Anzeigeeinheit in Kommunikationsverbindung mit der Aufbau-Schnittstelle zum Empfang der Messsignale der Mehrzahl von Gewichtsmesssensoren (z. B. direkt oder indirekt (weitergeleitet oder verarbeitet z. B. durch eine Verarbeitungseinheit)).

In einer Ausführungsform sind mehrere verteilt angeordnete Belader-Anzeigeeinheiten vorgesehen, die vorzugsweise jeweils einen Beladungszustand eines zugeordneten Abschnitts des Aufbaus und/oder jeweils Beladungszustände mehrerer zugeordneten Abschnitte des Aufbaus anzeigen. Damit kann bspw. ermöglicht werden, dass für verschiedene Beladungsvorgänge jeweils zumindest eine Belader-Anzeigeeinheit vorgesehen ist und/oder dass je nach Position des Beladers jeweils zumindest eine Belader-Anzeigeeinheit für diesen sichtbar ist.

In einer Ausführungsform ist eine Belader-Anzeigeeinheit vorgesehen, die vorzugsweise Beladungszustände mehrerer oder aller Abschnitte des Aufbaus anzeigt. Damit kann an einer Stelle ein Überblick über mehrere bis alle Abschnitte des Aufbaus ermöglicht werden.

In einer weiteren Ausführungsform ist der Aufbau ein geschlossener Aufbau, vorzugsweise ein Kofferaufbau und/oder ein Planenaufbau mit fester Decke, und die mindestens eine Belader-Anzeigeeinheit ist (z. B. innen) an einer Decke (z. B. einem hinteren Abschnitt der Decke bezüglich einer Vorwärtsfahrtrichtung des Nutzfahrzeugs) (und/oder z. B. an einer Seitenwand) des Aufbaus angeordnet. Damit kann die Belader-Anzeigeeinheit beispielsweise auch noch eingesehen werden, wenn der Aufbau (fast) vollständig beladen ist.

Es ist auch möglich, z. B. bei anderen Aufbautypen, eine oder mehrere Belader-Anzeigeeinheiten an Halter oder Tafeln zu montieren.

In einer weiteren Ausführungsform ist der Aufbau ein offener Aufbau, vorzugsweise ein Kipperund/oder ein Muldenaufbau, und die mindestens eine Belader-Anzeigeeinheit ist an beiden Längsaußenseiten des Aufbaus angeordnet (z. B. eine erste Belader-Anzeigeeinheit ist an einer ersten Längsaußenseite des Aufbaus angeordnet und eine zweite Belader-Anzeigeeinheit ist an einer entgegengesetzten zweiten Längsaußenseite des Aufbaus angeordnet).

Es ist beispielsweise auch möglich, mindestens eine Belader-Anzeigeeinheit an einer Rückseite des Aufbaus anzuordnen. Damit kann beispielsweise ein Fahrer eines Baggers oder Radladers während des Beladens den Beladungszustand des Aufbaus erkennen und den Aufbau entsprechend weiter beladen.

In einem weiteren Ausführungsbeispiel ist der Aufbau ein mit einer Plane bedeckter Aufbau, vorzugsweise ein Pritschenaufbau mit der Plane, und die mindestens eine Belader-Anzeigeeinheit ist an Spriegeln des Aufbaus und/oder tragenden Elementen einer Aufbaubedeckung angeordnet, vorzugsweise, um sowohl von innen als auch bei hochgeklappter und/oder abgenommener Plane von außen sichtbar zu sein.

In einem weiteren Ausführungsbeispiel ist der Aufbau ein offener Aufbau, vorzugsweise ein Pritschenaufbau und/oder ein Plattformaufbau, und die mindestens eine Belader-Anzeigeeinheit ist an einer Aufbaustirnwand des Aufbaus und/oder einer Außenrückwand eines Fahrerhauses des Nutzfahrzeugs angeordnet.

In einem weiteren Ausführungsbeispiel ist der Aufbau ein offener mehrstöckiger Aufbau, vorzugsweise ein Fahrzeugtransporteraufbau, und die mindestens eine Belader-Anzeigeeinheit ist je Stockwerk innen an Aufbauteilen und/oder Haltern in für den im zu verladenden Fahrzeug sitzenden Belader auf Augenhöhe angeordnet.

In einem weiteren Ausführungsbeispiel ist der Aufbau ein geschlossener Aufbau, vorzugsweise ein Tank- und/oder Siloaufbau, und die mindestens eine Belader-Anzeigeeinheit ist an beiden Längsaußenseiten des Aufbaus und/oder an einer Einfüllöffnung des Aufbaus angeordnet.

In einer weiteren Ausführungsform ist die mindestens eine Belader-Anzeigeeinheit außen und/oder von außen sichtbar an dem Nutzfahrzeug, vorzugsweise dem Aufbau, angeordnet (z. B. befestigt).

In einer Ausführungsvariante weist die Anzeigeeinrichtung eine in einem Fahrerhaus des Nutzfahrzeugs angeordnete, vorzugsweise hochauflösende, Fahrerhaus-Anzeigeeinheit auf. Vorzugsweise weist die Anzeigeeinrichtung sowohl die mindestens eine Belader-Anzeigeeinheit als auch die Fahrerhaus-Anzeigeeinheit auf.

Es ist auch möglich, dass die Anzeigeeinrichtung eine mobile Anzeigeeinheit, zum Beispiel ein Smartphone oder einen Tablet-Computer, aufweist.

In einer weiteren Ausführungsvariante weist das Nutzfahrzeug eine Verarbeitungseinheit auf, die zum Empfangen der Messsignale von der Mehrzahl von Gewichtsmesssensoren und zum Ausgeben von Ausgangssignalen an die Anzeigeeinrichtung ausgebildet ist, auf. Vorzugsweise vergleicht die Verarbeitungseinheit die Messsignale mit einem vorbestimmten und/oder einstellbaren gesetzlich zulässigen Grenzwert und gibt ein entsprechendes Ausgangssignal (d.h. entsprechend einem Ergebnis des Vergleichs) an die Anzeigeeinrichtung aus.

In einer Weiterbildung vergleicht die Verarbeitungseinheit die Messsignale von der Mehrzahl von Gewichtsmesssensoren zusätzlich mit einem vorbestimmten technisch zulässigen Grenzwert, der höher als der gesetzlich zulässige Grenzwert ist, und gibt ein entsprechendes Ausgangssignal an die Anzeigeeinrichtung aus. Vorzugsweise vergleicht die Verarbeitungseinheit die Messsignale von der Mehrzahl von Gewichtsmesssensoren zusätzlich mit einem weiteren vorbestimmten technisch zulässigen Grenzwert, der höher als der technisch zulässige Grenzwert ist, und gibt ein entsprechendes Ausgangssignal an die Anzeigeeinrichtung aus.

Es ist grundsätzlich möglich, dass nicht vorgesehen ist, eine automatische Beschränkung oder einen automatischen Eingriff bei Überladung vorzunehmen, sondern nur den Iststand der Beladung anzuzeigen. Bspw. kann es je nach Anwendung durchaus zu bewussten und zulässigen Überladungen kommen. Bspw. kann ein Fahrzeug außerhalb des öffentlichen Straßenverkehres auch mit mehr als der gesetzlich zulässigen Last bis zur technisch zulässigen Grenze betrieben werden oder mit Ausnahmegenehmigung unter Einschränkungen (z. B. verringerte Fahrzeuggeschwindigkeit) auch unter gewissen Bedingungen über diese hinaus. Daher ist es mit den über die Aufbau-Schnittstelle übertragenen Informationen für solche Anwendungsfälle auch möglich, bspw. nach der hierin beispielhaft offenbarten Logik mit farblichen Leuchten eine Anzeige mit mehreren grünen, mehreren gelben und mehreren roten Leuchten darzustellen oder individuelle andere Anzeigen und/oder andere/weitere Farben zu realisieren.

Gemäß der Erfindung weist das Nutzfahrzeug eine Kameravorrichtung auf, die zum Aufnehmen der unterschiedlichen Abschnitte des Aufbaus angeordnet ist. Gemäß der Erfindung werden Ausgangssignale bspw. von der Verarbeitungseinheit an die Anzeigeeinrichtung so ausgegeben, dass die ermittelten Beladungszustände der unterschiedlichen Abschnitte des Aufbaus entsprechend den unterschiedlichen Abschnitten in einer Aufnahme (z. B. Echtzeitaufnahme) der Kameravorrichtung überlagert werden und/oder der ermittelte Schwerpunkt eine Aufnahme (z. B. Echtzeitaufnahme) der Kameravorrichtung überlagert.

In einem weiteren Ausführungsbeispiel sind die ermittelten Beladungszustände jeweils durch eine Kombination von einer Anzahl von aufleuchtenden Leuchtsymbolen und einer Farbe der aufleuchtenden Leuchtsymbole auf der Anzeigeeinrichtung wiedergegeben.

Es ist möglich, dass Anzeigemöglichkeiten auf der Anzeigeeinrichtung eine Darstellung je Abschnitt sowie zusammen mit vorher initial ermittelten Leergewichten des Fahrzeuges, die sich daraus ermittelten Achslasten, jeweils sowohl als absoluter Gewichtswert wie auch mit farblicher Kennzeichnung aufweisen. Für den Belader kann bspw. alternativ eine Darstellung mit farblichen Leuchten sinnvoll sein, wenn bspw. bei Beladung mittels Radlader das genaue Gewicht der Füllung der Ladeschaufel nicht ermittelt werden kann.

Vorzugsweise kann die Anzeige in beliebig vielen Stufen erfolgen, bspw. in drei Stufen mit grün, gelb und rot, wobei je nach Anforderung unterschiedliche Grenzwerte für die unterschiedlichen Stufen einstellbar sein können oder bspw. in sechs Stufen mit vier grünen, einer gelben und einer roten Leuchte, wobei bspw. eine grüne Leuchte = 0-20%, zwei grüne Leuchten = 20-40%, drei grüne Leuchten = 40-60%, vier grüne Leuchten = 60-80%, die gelbe Leuchte alleine oder zusätzlich = 80-100% und die rote Leuchte alleine oder zusätzlich = >100% von einem Grenzwert (z. B. gesetzlich zulässiger Grenzwert) bedeuten.

In einer weiteren Ausführungsform weist das Nutzfahrzeug eine Anhänger- und/oder Auflieger-Schnittstelle zum Empfang von Gewichtsmessungen einer Beladung eines Anhängers oder Aufliegers zur Anzeige auf der Anzeigeeinrichtung auf. Alternativ oder zusätzlich weist das Nutzfahrzeug eine Kommunikationsschnittstelle zur Kommunikation mit einem externen Rechnersystem, vorzugsweise einem Flottenmanagementsystem, zur Übertragung der ermittelten Beladungszustände und/oder des ermittelten Schwerpunktes und/oder der ermittelten Achslasten, auf.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Abbildung eines Nutzfahrzeugs mit Aufbau gemäß der vorliegenden Offenbarung in einer Seitenansicht;
- Figur 2: eine schematische Abbildung des Nutzfahrzeugs gemäß der vorliegenden Offenbarung in einer Draufsicht (Aufbau transparent dargestellt);
- Figur 3A: eine beispielhafte Beladungsanzeige gemäß der vorliegenden Offenbarung;
- Figur 3B: eine weitere beispielhafte Beladungsanzeige gemäß der vorliegenden Offenbarung;
- Figur 4A: eine weitere beispielhafte Beladungsanzeige gemäß der vorliegenden Offenbarung; und
- Figur 4B: eine weitere beispielhafte Beladungsanzeige gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

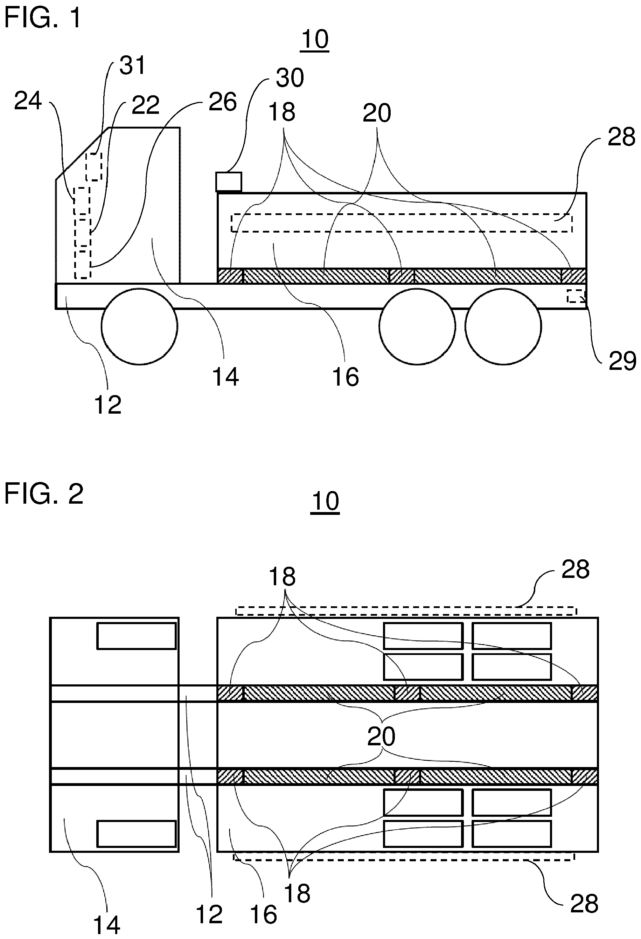

Die Figuren 1 und 2 zeigen ein als Lastkraftwagen ausgebildetes Nutzfahrzeug 10. Das Nutzfahrzeug 10 weist einen Fahrzeughauptrahmen 12, ein Fahrerhaus 14 und einen Aufbau 16 auf.

Der Fahrzeughauptrahmen 12 ist bspw. durch zwei parallele Längsträger gebildet, die durch mehrere Querträger miteinander verbunden sind. Der Fahrzeughauptrahmen 12 erstreckt sich in einer Längsrichtung des Nutzfahrzeugs 10. Der Fahrzeughauptrahmen 12 stützt das Fahrerhaus 14. Der Fahrzeughauptrahmen 12 stützt den Aufbau 16.

Das Fahrerhaus 14 weist einen Fahrerarbeitsplatz für einen Fahrer des Nutzfahrzeugs 10 auf. Das Fahrerhaus 14 ist in einer Längsrichtung des Nutzfahrzeugs 10 vor dem Aufbau 16 angeordnet. Das Fahrerhaus 14 kann bspw. kippbar am Fahrzeughauptrahmen 12 gelagert sein.

Der Aufbau 16 ist zum Aufnehmen von Ladegut, das von dem Nutzfahrzeug 10 zu transportieren ist, ausgebildet. Der Aufbau 16 kann zu allen Seiten hin geschlossen sein und bspw. eine oder mehrere Türen zum Be- und Entladen aufweisen, z. B. Kofferaufbau. Der Aufbau 16 kann z. B. auch nach oben hin zum Be- und Entladen offen sein, z. B. Muldenaufbau oder Kipperaufbau.

An dem Fahrzeughauptrahmen 12 ist bereits vor der Montage des Aufbaus 16 eine Mehrzahl von Gewichtsmesssensoren 18 vormontiert. Die Gewichtsmesssensoren 18 sind insbesondere aufbauunabhängig an dem Fahrzeughauptrahmen 12 vormontiert, z. B. in diesen integriert. Damit können die Gewichtssensoren 18 mit einer Vielzahl von unterschiedlichen Aufbauten 16 verwendet werden. Dies ist von Relevanz, da die Aufbauten 16 typischerweise von spezialisierten Aufbauherstellern gefertigt und auf ein vom einem Nutzfahrzeughersteller bereits betriebsfertig hergestellten Nutzfahrzeug 10 ohne Aufbau montiert werden. Bspw. können die Gewichtsmesssensoren 18 an einer Oberseite des Fahrzeughauptrahmens 12 angeordnet sein, z. B. zur Anordnung an vorbestimmten Anbindungspunkten zum Aufbau 16. Wie dargestellt ist, können die Gewichtsmesssensoren somit prinzipiell zwischen dem Fahrzeughauptrahmen 12 und dem Aufbau 16 angeordnet sein.

Die Mehrzahl von Gewichtsmesssensoren 18 ist so verteilt am Fahrzeughauptrahmen 12 angeordnet, dass unterschiedliche Abschnitte des Aufbaus 16 überwacht werden können. Beispielsweise können zumindest an allen vier Ecken der Anbindung des Aufbaus 16 Gewichtsmesssensoren 18 angeordnet sein, zum Beispiel an Längsträgern oder Querträgern des Fahrzeughauptrahmens 12. Zum Beispiel kann ein erster Gewichtsmesssensor 18 bezüglich einer Vorwärtsfahrtrichtung des Nutzfahrzeugs 10 vorne an, vorzugsweise auf, einem ersten Längsträger des Fahrzeughauptrahmens 12 angeordnet sein. Ein zweiter Gewichtsmesssensoren 18 kann bezüglich der Vorwärtsfahrtrichtung hinten an, vorzugsweise auf, dem ersten Längsträger angeordnet sein. Ein dritter Gewichtsmesssensoren 18 kann bezüglich der Vorwärtsfahrtrichtung des Nutzfahrzeugs vorne an, vorzugsweise auf, einem zweiten Längsträger des Fahrzeughauptrahmens 12 angeordnet sein. Ein vierter Gewichtsmesssensoren 18 kann bezüglich der Vorwärtsfahrtrichtung hinten an, vorzugsweise auf, dem zweiten Längsträger angeordnet sein. Es ist auch möglich, dass der erste und dritte Gewichtsmesssensor 18 an, vorzugsweise auf, gegenüberliegenden Enden eines vorderen Querträgers des Fahrzeughauptrahmens 12 und/oder der zweite und vierte Gewichtsmesssensoren 18 an gegenüberliegenden Enden eines hinteren Querträgers des Fahrzeughauptrahmens angeordnet sind. Wie dargestellt ist, können auch beispielsweise sechs Gewichtsmesssensoren 18 vorgesehen sein, vorzugsweise zur Messung zweier vorderer (links und rechts), zweier mittlerer (links und rechts) und zweier hinterer (links und rechts) Abschnitte des Aufbaus 16. Es ist möglich, dass zwischen den Gewichtssensoren 18 beispielsweise Zwischenelemente 20 angeordnet sind, wie in den Figuren 1 und 2 dargestellt ist. Eine Erhöhung der Messgenauigkeit ist prinzipiell dadurch möglich, dass die Anzahl der Gewichtsmesssensoren 18 vergrößert und die jeweilige Position des zusätzlichen Gewichtsmesssensoren 18 passend zu den Anbindungspunkten des Aufbaus 16 an dem Fahrzeughauptrahmen 12, wie beispielsweise Brückenbefestigungswinkel, gewählt wird.

Die Gewichtsmesssensoren 18 können nach jeglichem bekannten Prinzip eine Gewichtskraftmessung am Aufbau 16 vornehmen. Zum Beispiel können die Gewichtsmesssensoren 18 als Drucksensoren, als optische Sensoren, als elektronische Sensoren usw. ausgebildet sein. Die Messung durch die Gewichtsmesssensoren 18 kann mit einer sinnvollen Genauigkeit erfolgen, zum Beispiel abhängig vom Ladegut, möglicherweise auch je nach Anwendung mit anpassbaren Gewichtstoleranzbereichen.

Die Gewichtsmesssensoren 18 können elektrische Signale, die eine gemessene Gewichtskraft angeben, ausgeben, die bspw. verarbeitet oder unverarbeitet von einer Anzeigeeinrichtung 24, 28 angezeigt werden können. Die Gewichtsmesssensoren 18 können zum Übertragen der elektrischen Signale mit einer Verarbeitungseinheit 22 in Kommunikationsverbindung stehen.

Es ist möglich, dass die Verarbeitungseinheit 22 beispielsweise initial bezüglich des Aufbaus 16 kalibriert wird, um ein Leergewicht des Aufbaus 16 und zulässige Grenzen für das Ladungsgewicht im Aufbau 16 zu bestimmen. Hierzu können beispielsweise Informationen zu Gewichten von Nutzfahrzeug 10, Aufbau 16, Achslastverteilung (im aufgebauten Zustand) usw. ermittelt und in einem entsprechenden Speicher der Verarbeitungseinheit 22 hinterlegt werden. Die Verarbeitungseinheit 22 kann dann auf diese Werte in deren Berechnungslogik für die Beladungszustände und den Schwerpunkt zugreifen.

Die Verarbeitungseinheit 22 kann die Beladungszustände der unterschiedlichen überwachten Abschnitte des Aufbaus 16 basierend auf den elektrischen Signalen von den Gewichtsmesssensoren 18 ermitteln. Die Verarbeitungseinheit 22 kann ferner einen Schwerpunkt der Beladung des Aufbaus 16 basierend auf den elektrischen Signalen von den Gewichtsmesssensoren 18 ermitteln. Die Verarbeitungseinheit 22 kann bspw. eine Fahrerhaus-Anzeigeeinheit 24 zur Anzeige der Beladungszustände der unterschiedlichen Abschnitte und/oder des Schwerpunkts des Aufbaus 16 ansteuern. Dadurch kann ein Benutzer im Fahrerhaus, z. B. der Fahrer des Nutzfahrzeugs 10, über den Beladungszustand jedes überwachten Abschnitts des Aufbaus 16 und des Schwerpunkts der Beladung informiert werden. Beispielsweise kann die Fahrerhaus-Anzeigeeinheit 24 eine beispielsweise hochauflösende Displayanzeige (zum Beispiel LCD-Display), bevorzugt ein Sekundärdisplay in oder an der Mittelkonsole, vorzugsweise außerhalb des Kombiinstruments hinter einem Lenkrad im Fahrerhaus, aufweisen.

Die Gewichtsmesssensoren 18 können ferner direkt oder indirekt, zum Beispiel über die Verarbeitungseinheit 22, mit einer elektronischen Aufbau-Schnittstelle 26 verbunden sein. Die elektronische Aufbau-Schnittstelle 26 kann vom Hersteller des Nutzfahrzeugs 10 (ohne Aufbau) vorgesehen sein, um eine Kommunikationsschnittstelle für den Hersteller des Aufbaus 16 bereitzustellen, über die die relevanten Daten der Gewichtsmesssensoren 18 abrufbar sind. Die elektronische Aufbau-Schnittstelle 26 kann eine standardisierte Schnittstelle des Herstellers sein. Somit können von einer Vielzahl von Herstellern für unterschiedlichste Aufbauten 16 die Informationen hinsichtlich der Gewichtsmessungen der Gewichtsmesssensoren 18 (zum Beispiel Beladungszustände der einzelnen Abschnitte und/oder Schwerpunkt der Beladung des Aufbaus 16) zur Weiterverwendung abrufbar sein. Dies ermöglicht insbesondere, dass die Aufbauhersteller eigene Belader-Anzeigeeinheiten 28 am Nutzfahrzeug 10, vorzugsweise im oder außen am Aufbau 16, anordnen können. Damit können aufbauspezifisch, d.h. abhängig von Typ und Größe des Aufbaus 16, eine oder mehrere Belader-Anzeigeeinheiten 28 zum Informieren von Beladern des Aufbaus 16 vorgesehen werden.

Der oder die Belader-Anzeigeeinheiten 28 sind dabei vorzugsweise so angeordnet, dass sie entsprechend dem jeweiligen Typ und der jeweiligen Größe des Aufbaus 16 beim bestimmungsgemäßen Beladen des jeweiligen Aufbaus 16 für den Belader gut sichtbar sind. In Ausführungsformen mit mehreren Belader-Anzeigeeinheiten 28 können diese verteilt außen am oder im Aufbau 16 angeordnet und redundant, das heißt jeweils auf ähnliche oder identische Weise ausgebildet bzw. ähnliche oder identische Informationen anzeigend, vorgesehen sein. Damit ist es beispielsweise möglich, dass der Belader beim Ladevorgang direkt erkennen kann, welches Gewicht bereits aufgeladen ist, welches Gewicht noch aufgeladen werden darf und/oder wie sich das Gewicht verteilt. Durch das Erkennen der Verteilung des Gewichts ist es zudem möglich, gezielt weiter zu beladen. So kann sowohl der vorhandene Laderaum im Aufbau 16 möglichst effektiv ausgenutzt als auch eine korrekte Achslastverteilung sichergestellt werden.

Beispielsweise wird auf die Figuren 1 und 2 verwiesen, die einen Mulden- bzw. Kipperaufbau 16 zeigen. Dieser Aufbau 16 wird üblicherweise von einer Längsseite des Aufbaus 16 aus, zum Beispiel von einem Radlader, einem Bagger usw., beladen. Die Belader-Anzeigeeinheiten 28 können hier beispielsweise an beiden Längsaußenseiten des Aufbaus 16 angeordnet sein, sodass sie für den Fahrer des Radladers oder Baggers usw. von außen während des Beladens des Aufbaus 16 gut sichtbar sind. Die Belader-Anzeigeeinheiten 28 können sich im Wesentlichen entlang einer gesamten Länge des Aufbaus 16 erstrecken (wie dargestellt ist) oder nur in einem Teilabschnitt, zum Beispiel vorne, mittig oder hinten, an den Längsaußenseiten des Aufbaus 16 angeordnet sein. Eine alternative oder zusätzliche Belader-Anzeigeeinheit kann beispielsweise an einer Rückseite des Aufbaus 16 angeordnet sein.

In einem anderen, nicht gesondert in den Figuren dargestellten Ausführungsbeispiel ist der Aufbau 16 als ein Kofferaufbau gebildet, bei dem die Belader-Anzeigeeinheit insbesondere im Aufbau 16 an einer Decke des Aufbaus 16 angeordnet ist. Es ist auch möglich, alternative oder zusätzliche Anzeigeeinheiten innen oder außen am Aufbau 16 an Seitenwänden, am Boden, an einer oder mehreren Türen des Aufbaus 16 anzuordnen.

Es ist beispielsweise auch möglich, dass zusätzlich oder alternativ eine mobile Anzeigeeinheit vorgesehen ist, die beispielsweise kabellos oder kabelgebunden mit der Verarbeitungseinheit 22 zum Anzeigen der gemessenen Beladungszustände und/oder des Schwerpunkts kommuniziert. Beispielsweise kann die mobile Anzeigeeinheit als ein Tablet-Computer oder ein Smartphone ausgebildet sein.

Es ist zudem auch möglich, dass eine Benutzerschnittstelle (nicht dargestellt), z. B. für den Fahrer und/oder den Belader, vorgesehen ist. Über die Benutzerschnittstelle können bspw. die Größe und Anzahl der überwachten Bereiche verändert werden. Zum Beispiel können getrennt überwachte Bereiche in bestimmten Anwendungsfällen zu einem einzigen Bereich zusammengefasst werden. Die Bereiche können parametrierbar sein. Derartige Einstellungen können bspw. auch vom Aufbauhersteller selbst veränderbar oder unveränderbar voreingestellt sein.

Die Anzeigeeinheiten 24, 28 sind so auszuführen, dass sie bei jedem Beladungszustand, tags und nachts, auch bei direkter Sonneneinstrahlung erkennbar sind.

Die Gewichtsmesssensoren 18 können die Gewichtsmessungen sowohl im Stillstand als auch während der Fahrt des Kraftfahrzeugs durchführen. Die Anzeigeeinheiten 24, 28 können das Gewicht in den einzelnen Abschnitten des Aufbaus 16 und den Schwerpunkt der Ladung im Aufbau 16 beispielsweise kontinuierlich jederzeit, sowohl im Stillstand als auch während der Fahrt, anzeigen. Eine Anzeige während der Fahrt durch die Fahrerhaus-Anzeigeeinheiten 24 ermöglicht beispielsweise auch, dass ungewünschte Ladungsverschiebungen während der Fahrt erkannt werden können, die ihre Ursache beispielsweise in einer ungenügenden Ladungssicherung haben können.

Es ist zudem möglich, dass das Nutzfahrzeug eine elektronische Anhänger- und/oder Auflieger-Schnittstelle 29 zum Empfang von Gewichtsmessungen einer Beladung eines Anhängers oder Aufliegers zur Anzeige auf der Anzeigeeinheit 24 und/oder 28 aufweist.

Außerdem kann eine Kommunikationsschnittstelle 31 zur Kommunikation mit einem externen Rechnersystem, vorzugsweise einem Flottenmanagementsystem, zur Übertragung der ermittelten Beladungszustände und/oder des ermittelten Schwerpunktes vorgesehen sein. So können die Beladungsinformationen bspw. an einen Spediteur oder Fahrzeugbetreiber übertragen werden. Dieser kann so bspw. zu jedem Zeitpunkt während einer Tour potentiell weitere Ladekapazität erkennen usw.

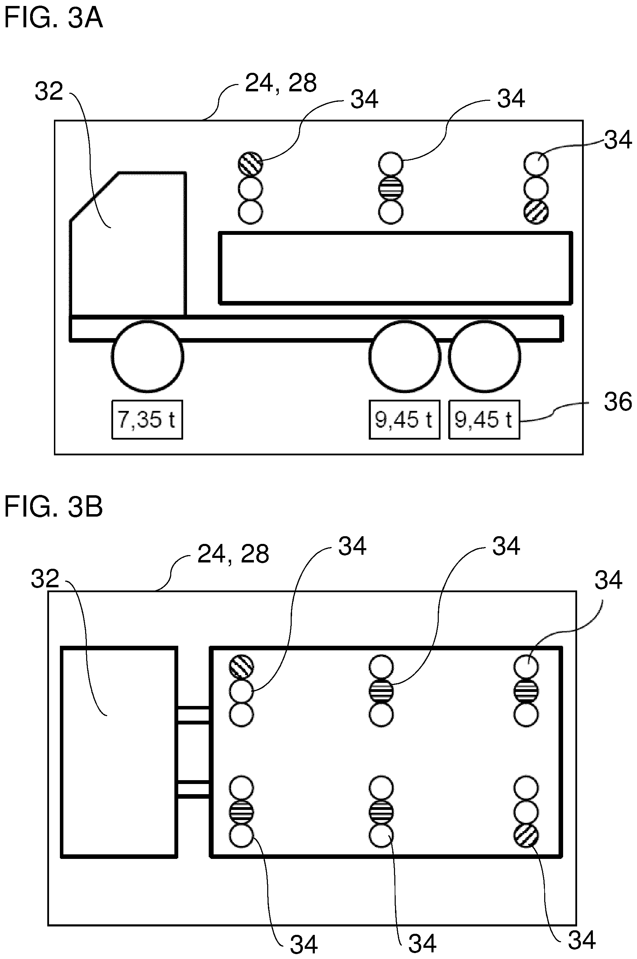

Die Anzeige durch die Anzeigeeinheiten 24, 28 können beispielsweise eine grafische Anzeige des gesamten Fahrzeuges mit den Informationen der tatsächlichen einzelnen Gewichte der Ladung die Gewichtsmesssensor 18 oder farbige Leuchten oder eine Kombination davon aufweisen, wie unter Bezugnahme auf die Figuren 3A bis 4B beschrieben ist.

Es ist beispielsweise auch möglich, dass eine Kameravorrichtung 30 (siehe Figur 1) beispielsweise am Aufbau 16 angeordnet ist, die den Aufbau 16 aufnimmt, zum Beispiel in Echtzeit. Die Kameravorrichtung 30 kann vorzugsweise zum Aufnehmen der unterschiedlichen Abschnitte des Aufbaus 16, die den Gewichtsmesssensoren 18 zugeordnet sind, angeordnet sein. Die Anzeigeeinheiten 24, 28 können die ermittelten Beladungszustände und/oder den ermittelten Schwerpunkt einer Aufnahme (z. B. Echtzeitaufnahme, zum Beispiel bewegtes Bild) der Kameravorrichtung 30 überlagern. Hierbei kann es möglich sein, dass die Aufnahme zusätzlich durch Hilfslinien für die Beladungsabschnitte überlagert wird und beispielsweise Farbinformationen für die jeweiligen Beladungsabschnitte eingeblendet werden. Beispielsweise können farbige Leuchtsymbole für jeden Beladungsbereich eingeblendet werden oder die Beladungsbereiche jeweils flächig eingefärbt werden, in Abhängigkeit von dem jeweiligen Beladungszustand. Ferner kann der ermittelte Schwerpunkt perspektivisch korrekt der Aufnahme der Kameravorrichtung 30 überlagert werden.

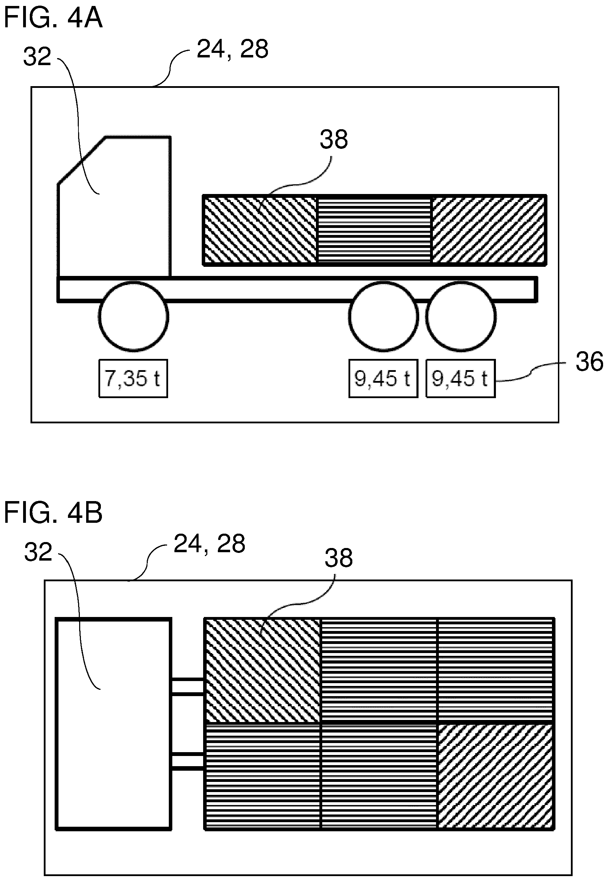

Die Figuren 3A bis 4B zeigen unterschiedliche beispielhafte Darstellung einer grafischen Anzeige auf der Anzeigeeinheit 24 und/oder 28. Die Anzeige ist hier sowohl in Seitenansicht (Figur 3A, 4A) als auch in Draufsicht (Figuren 3B, 4B) gezeigt. Es sind bspw. auch Kombinationen der Anzeigen gemäß den Figuren 3A bis 4B möglich.

Es wird jeweils ein Piktogramm 32, das das Nutzfahrzeug 10 graphisch darstellt, angezeigt. Zusätzlich wird in den Figuren 3A und 3B zu jedem überwachten Bereich eine Farbanzeige (z. B. Ampel) 34 gezeigt, die bspw. mit den Farben rot, gelb, grün den jeweiligen Zustand des Bereichs des Aufbaus 16 anzeigt (unterschiedliche Schraffierungen entsprechen unterschiedlichen Farben). Die Anzahl der Farbanzeigen 34 kann je nach Anzahl der tatsächlich vorhandenen Gewichtsmesssensoren 18 auch kleiner oder grösser der hier dargestellten Anzahl sein. Zusätzlich können bspw. auch alphanumerische Anzeigen 36 betreffend die jeweiligen Achslasten angezeigt werden, die bspw. aus den Gewichtsmessungen der Gewichtsmesssensoren 18 ermittelt werden können, z. B. von der Verarbeitungseinheit 22.

In anderen Ausführungsbeispielen kann die Anzeige mittels Leuchtsymbolen, die den überwachen Bereichen zugeordnet sind, feiner ausgeführt sein (nicht gesondert dargestellt). So kann bspw. über eine Anzahl von aufleuchtenden Symbolen sowie deren Einfärbung ein jeweiliger Beladungszustand im zugeordneten Bereich für den Betrachter verständlich wiedergegeben werden.

Beispielhaft kann dies bei einem Nutzfahrzeug mit Kipperaufbau für jeden überwachten Bereich des Aufbaus 16 wie folgt ausgeführt sein: 1 grüne Leuchte = zwischen 0% und 20% der gesetzlichen Grenze zugeladen. 2 grüne Leuchten = zwischen 20% und 40% der gesetzlichen Grenze zugeladen. 3 grüne Leuchten = zwischen 40% und 60% der gesetzlichen Grenze zugeladen. 4 grüne Leuchten = zwischen 60% und 80% der gesetzlichen Grenze zugeladen. 4 grüne Leuchten und 1 gelbe Leuchte = zwischen 80% und 100% der gesetzlichen Grenze zugeladen. 4 grüne Leuchten und 1 gelbe Leuchte und 1 rote Leuchte = zwischen 100% und 115% der gesetzlichen Grenze und/oder zwischen 0% und 50% des Bereiches zwischen gesetzlicher und technischer Grenze zugeladen. 4 grüne Leuchten und 1 gelbe Leuchte und 2 rote Leuchten = zwischen 115% und 130% der gesetzlichen Grenze und/oder zwischen 50% und 100% des Bereiches zwischen gesetzlicher und technischer Grenze zugeladen. 4 grüne Leuchten und 1 gelbe Leuchte und 2 rote Leuchten und 1 blaue Leuchte = zwischen 100% und 110% der technischen Grenze zugeladen. 4 grüne Leuchten und 1 gelbe Leuchte und 2 rote Leuchten und 2 blaue Leuchten = zwischen 110% und 120% der technischen Grenze zugeladen. Hintergrund dieser detaillierten Anzeigemöglichkeit kann sein, dass es für ein Nutzfahrzeug nicht nur eine Grenze in der Zuladung geben kann. Stattdessen kann bspw. eine gesetzlich zulässige Begrenzung für den Betrieb auf öffentlichen Straßen, eine technisch zulässige für den Betrieb auf nicht-öffentlichen Straßen und in manchen Fällen auch eine höhere bzw. weitere technisch zulässige Begrenzung mit Betriebseinschränkungen für das Nutzfahrzeug 10, bspw. Betrieb nur bei reduzierter Fahrzeuggeschwindigkeit, vorhanden sein, so dass eine angepasste differenzierte Anzeige hier sinnvoll sein kann und einen Mehrwert bietet. Zusätzlich ergibt sich die Möglichkeit mit einer solch differenzierten Anzeige auch erkennen zu können, wie viel bei Bedarf ab- oder umgeladen werden muss, um eine beim Beladen angestrebte Grenze nicht zu überschreiten.

Unabhängig von dem obigen konkreten Ausführungsbeispiel bzgl. einer möglichen Anzeige kann der oder die gesetzlich zulässigen Grenzwerte, der oder die technisch zulässigen Grenzwerte und der oder die weiteren bzw. höheren technisch zulässigen Grenzwerte bspw. in einem Speicher der Verarbeitungseinheit 22 gespeichert sein. Die Verarbeitungseinheit 22 kann die Anzeigeeinheiten 24, 28 entsprechend einem oder mehreren Vergleichen der durch die Gewichtsmesssensoren ermittelten Beladungszustände mit dem oder den Grenzwerten ansteuern.

In den Figuren 4A und 4B können zusätzlich zu dem Nutzfahrzeug-Piktogramm 32 die überwachten Bereiche im Aufbau 16 als Segmente 38 gezeigt werden. Die Segmente 38 können mit unterschiedlichen Farben, z .B. rot, gelb, grün, entsprechend dem jeweiligen Beladungszustand des Bereiches bzw. Segments eingefärbt sein. Unterschiedliche Schraffierungen können unterschiedlichen Farben entsprechen.

### Bezugszeichenliste

- 10: Nutzfahrzeug
- 12: Fahrzeughauptrahmen
- 14: Fahrerhaus
- 16: Aufbau
- 18: Gewichtsmesssensor
- 20: Zwischenelement
- 22: Verarbeitungseinheit
- 24: Fahrerhaus-Anzeigeeinheit
- 26: Aufbau-Schnittstelle
- 28: Belader-Anzeigeeinheit
- 29: Anhänger- und/oder Auflieger-Schnittstelle
- 30: Kameravorrichtung
- 31: Kommunikationsschnittstelle
- 32: Nutzfahrzeug-Piktogramm
- 34: Farbanzeige
- 36: Alphanumerische Anzeige
- 38: Segmente

## Patentansprüche

1. Nutzfahrzeug (10), vorzugsweise Lastkraftwagen, aufweisend:
einen Aufbau (16) zum Laden von Ladegut;
einen Fahrzeughauptrahmen (12), an dem eine Mehrzahl von Gewichtsmesssensoren (18) vormontiert und zur Gewichtsmessung unterschiedlicher Abschnitte des Aufbaus (16) verteilt angeordnet ist, wobei der Aufbau (16) nachträglich auf den Fahrzeughauptrahmen (12) mit der vormontierten Mehrzahl von Gewichtsmesssensoren (18) aufgesetzt ist; und
eine Anzeigeeinrichtung (24, 28) zur Anzeige von durch Gewichtsmessungen der Mehrzahl von Gewichtsmesssensoren (18) ermittelten Beladungszuständen der unterschiedlichen Abschnitte des Aufbaus (16) und/oder eines durch Gewichtsmessungen der Mehrzahl von Gewichtsmesssensoren (18) ermittelten Ladungsschwerpunktes einer Beladung des Aufbaus (16) und/oder von durch Gewichtsmessungen der Mehrzahl von Gewichtsmesssensoren (18) ermittelten Achslasten des Nutzfahrzeugs (10);
**gekennzeichnet durch**:
eine Kameravorrichtung (30), die zum Aufnehmen der unterschiedlichen Abschnitte des Aufbaus (16) angeordnet ist;
wobei die Anzeigeeinrichtung (24, 28) die ermittelten Beladungszustände der unterschiedlichen Abschnitte des Aufbaus (16) entsprechend den unterschiedlichen Abschnitten in einer Aufnahme, vorzugsweise Echtzeitaufnahme, der Kameravorrichtung (30) überlagert und/oder den ermittelten Schwerpunkt einer Aufnahme, vorzugsweise Echtzeitaufnahme, der Kameravorrichtung (30) überlagert.

2. Nutzfahrzeug (10) nach Anspruch 1, wobei:
die Mehrzahl von Gewichtsmesssensoren (18) aufbauunabhängig an dem Fahrzeughauptrahmen (12) zur Verwendung mit einer Vielzahl von unterschiedlichen Aufbauten zum nachträglichen Aufsetzen auf den Fahrzeughauptrahmen (12) vormontiert ist; und/oder
der Aufbau (16) aus einer Gruppe von einer Mehrzahl von Aufbauten, vorzugsweise von unterschiedlichen Aufbautypen, beispielsweise umfassend mindestens einen offenen Aufbau und mindestens einen geschlossenen Aufbau, ausgewählt ist, wobei die Mehrzahl von Aufbauten zum Aufsetzen auf den Fahrzeughauptrahmen (12) und zur Verwendung mit der Mehrzahl von Gewichtsmesssensoren (18) ausgebildet ist.

3. Nutzfahrzeug (10) nach Anspruch 1 oder Anspruch 2, wobei:
die Mehrzahl von Gewichtsmesssensoren (18) an Anbindungspunkten des Fahrzeughauptrahmens (12) zum Aufbau (16) angeordnet ist, vorzugsweise zumindest an vier äußeren Eckpunkten einer Anbindung des Aufbaus (16), beispielsweise an zumindest sechs Anbindungspunkten.

4. Nutzfahrzeug (10) nach einem der vorherigen Ansprüche, ferner aufweisend:
eine elektrische oder elektronische Aufbau-Schnittstelle (26) in Kommunikationsverbindung mit der Mehrzahl von Gewichtsmesssensoren (18) zum Bereitstellen der Messsignale der Mehrzahl von Gewichtsmesssensoren (18) mittels der elektrischen oder elektronischen Aufbau-Schnittstelle (26).

5. Nutzfahrzeug (10) nach einem der vorherigen Ansprüche, wobei:
die Anzeigeeinrichtung (24, 28) mindestens eine Belader-Anzeigeeinheit (28) aufweist, die außerhalb eines Fahrerhauses (14) des Nutzfahrzeugs (10), vorzugsweise sichtbar für einen den Aufbau (16) beladenden Belader, angeordnet ist.

6. Nutzfahrzeug (10) nach Anspruch 5, wobei:
die mindestens eine Belader-Anzeigeeinheit (28) in Kommunikationsverbindung mit der Aufbau-Schnittstelle (26) zum Empfang der Messsignale der Mehrzahl von Gewichtsmesssensoren (18) steht.

7. Nutzfahrzeug (10) nach Anspruch 5 oder Anspruch 6, wobei:
mehrere verteilt angeordnete Belader-Anzeigeeinheiten (28) vorgesehen sind, die vorzugsweise jeweils einen Beladungszustand eines zugeordneten Abschnitts des Aufbaus (16) und/oder jeweils Beladungszustände mehrerer zugeordneten Abschnitte des Aufbaus (16) anzeigen; oder
eine Belader-Anzeigeeinheiten (28) vorgesehen ist, die vorzugsweise Beladungszustände mehrerer oder aller Abschnitte des Aufbaus (16) anzeigt.

8. Nutzfahrzeug (10) nach einem der Ansprüche 5 bis 7, wobei
der Aufbau (16) ein geschlossener Aufbau, vorzugsweise ein Kofferaufbau und/oder ein Planenaufbau mit fester Decke, ist und die mindestens eine Belader-Anzeigeeinheit (28) an einer Decke des Aufbaus (16) angeordnet ist; oder
der Aufbau (16) ein mit einer Plane bedeckter Aufbau, vorzugsweise ein Pritschenaufbau mit der Plane, ist und die mindestens eine Belader-Anzeigeeinheit (28) an Spriegeln des Aufbaus und/oder tragenden Elementen einer Aufbaubedeckung angeordnet ist, vorzugsweise um von innen und bei hochgeklappter und/oder abgenommener Plane von außen sichtbar zu sein; oder
der Aufbau (16) ein offener Aufbau, vorzugsweise ein Kipper- und/oder ein Muldenaufbau, ist und die mindestens eine Belader-Anzeigeeinheit (28) an beiden Längsaußenseiten des Aufbaus (16) angeordnet ist; oder
der Aufbau (16) ein offener Aufbau, vorzugsweise ein Pritschenaufbau und/oder ein Plattformaufbau, ist und die mindestens eine Belader-Anzeigeeinheit (28) an einer Aufbaustirnwand des Aufbaus (16) und/oder einer Außenrückwand eines Fahrerhauses (14) des Nutzfahrzeugs (10) angeordnet ist; oder
der Aufbau (16) ein offener mehrstöckiger Aufbau, vorzugsweise ein Fahrzeugtransporteraufbau, ist und die mindestens eine Belader-Anzeigeeinheit (28) je Stockwerk innen an Aufbauteilen und/oder Haltern in für den im zu verladenden Fahrzeug sitzenden Belader auf Augenhöhe angeordnet ist; oder
der Aufbau (16) ein geschlossener Aufbau, vorzugsweise ein Tank- und/oder Siloaufbau, ist und die mindestens eine Belader-Anzeigeeinheit (28) an beiden Längsaußenseiten des Aufbaus (16) und/oder an einer Einfüllöffnung des Aufbaus angeordnet ist.

9. Nutzfahrzeug (10) nach einem der Ansprüche 5 bis 8, wobei:
die mindestens eine Belader-Anzeigeeinheit (28) außen und/oder von außen sichtbar an dem Nutzfahrzeug (10), vorzugsweise dem Aufbau (16), angeordnet ist.

10. Nutzfahrzeug (10) nach einem der vorherigen Ansprüche, wobei:
die Anzeigeeinrichtung (24, 28) eine in einem Fahrerhaus (14) des Nutzfahrzeugs (10) angeordnete, vorzugsweise hochauflösende, Fahrerhaus-Anzeigeeinheit (24) aufweist, und vorzugsweise:
die Anzeigeeinrichtung (24, 28) sowohl die mindestens eine Belader-Anzeigeeinheit (28) als auch die Fahrerhaus-Anzeigeeinheit (24) aufweist.

11. Nutzfahrzeug (10) nach einem der vorherigen Ansprüche, ferner aufweisend:
eine Verarbeitungseinheit (22), die zum Empfangen der Messsignale von der Mehrzahl von Gewichtsmesssensoren (18) und zum Ausgeben von Ausgangssignalen an die Anzeigeeinrichtung (24, 28) ausgebildet ist, wobei die Verarbeitungseinheit (22) die Messsignale mit einem vorbestimmten gesetzlich zulässigen Grenzwert vergleicht und ein entsprechendes Ausgangssignal an die Anzeigeeinrichtung (24, 28) ausgibt.

12. Nutzfahrzeug (10) nach Anspruch 11, wobei:
die Verarbeitungseinheit (22) die Messsignale von der Mehrzahl von Gewichtsmesssensoren (18) zusätzlich mit einem vorbestimmten technisch zulässigen Grenzwert, der höher als der gesetzlich zulässige Grenzwert ist, vergleicht und ein entsprechendes Ausgangssignal an die Anzeigeeinrichtung (24, 28) ausgibt, und vorzugsweise:
die Verarbeitungseinheit (22) die Messsignale von der Mehrzahl von Gewichtsmesssensoren (18) zusätzlich mit einem weiteren vorbestimmten technisch zulässigen Grenzwert, der höher als der technisch zulässige Grenzwert ist, vergleicht und ein entsprechendes Ausgangssignal an die Anzeigeeinrichtung (24, 28) ausgibt.

13. Nutzfahrzeug (10) nach einem der vorherigen Ansprüche, wobei:
die Aufnahme zusätzlich durch Hilfslinien für die Abschnitte überlagert wird und besonders bevorzugt Farbinformationen für die jeweiligen Abschnitte eingeblendet werden.

14. Nutzfahrzeug (10) nach einem der vorherigen Ansprüche, wobei:
die ermittelten Beladungszustände jeweils durch eine Kombination von einer Anzahl von aufleuchtenden Leuchtsymbolen und einer Farbe der aufleuchtenden Leuchtsymbole auf der Anzeigeeinrichtung (24, 28) wiedergegeben sind.

15. Nutzfahrzeug (10) nach einem der vorherigen Ansprüche, ferner aufweisend:
eine Anhänger- und/oder Auflieger-Schnittstelle (29) zum Empfang von Gewichtsmessungen einer Beladung eines Anhängers oder Aufliegers zur Anzeige auf der Anzeigeeinrichtung (24, 28); und/oder
eine Kommunikationsschnittstelle (31) zur Kommunikation mit einem externen Rechnersystem, vorzugsweise einem Flottenmanagementsystem, zur Übertragung der ermittelten Beladungszustände und/oder des ermittelten Schwerpunktes und/oder der ermittelten Achslasten.

## Claims

1. A commercial vehicle (10), preferably a lorry, comprising
a body (16) for loading cargo;
a vehicle main frame (12), on which a plurality of weight measurement sensors (18) are pre-mounted and arranged in a distributed manner for measuring the weight of different sections of the body (16), wherein the body (16) is post-mounted on the vehicle main frame (12) with the pre-mounted plurality of weight measurement sensors (18); and
a display device (24, 28) for displaying loading states of the different sections of the body (16) determined by weight measurements of the plurality of weight measurement sensors (18) and/or a load centre of gravity of a load in the body (16) determined by weight measurements of the plurality of weight measurement sensors (18) and/or axle loads of the commercial vehicle (10) determined by weight measurements of the plurality of weight measurement sensors (18);
**characterized by**
a camera device (30) which is arranged to record the different sections of the body (16);
wherein the display device (24, 28) superimposes the determined loading states of the different sections of the body (16) corresponding to the different sections in a recording, preferably a real-time recording, of the camera device (30) and/or superimposes the determined centre of gravity on a recording, preferably a real-time recording, of the camera device (30).

2. The commercial vehicle (10) according to claim 1, wherein:
the plurality of weight measurement sensors (18) is pre-mounted to the vehicle main frame (12) independently of the body for use with a plurality of different bodies for post-mounting to the vehicle main frame (12); and/or
the body (16) is selected from a group of a plurality of bodies, preferably of different types of body, for example comprising at least one open body and at least one closed body, wherein the plurality of bodies is configured for mounting to the vehicle main frame (12) and for use with the plurality of weight measurement sensors (18).

3. The commercial vehicle (10) according to claim 1 or claim 2, wherein:
the plurality of weight measurement sensors (18) is arranged at connection points of the vehicle main frame (12) to the body (16), preferably at least at four outer corner points of a connection of the body (16), for example at least six connection points.

4. The commercial vehicle (10) according to one of the preceding claims, further comprising:
an electrical or electronic body interface (26) in communication connection with the plurality of weight measurement sensors (18) for providing the measurement signals of the plurality of weight measurement sensors (18) by means of the electrical or electronic body interface (26).

5. The commercial vehicle (10) according to one of the preceding claims, wherein:
the display device (24, 28) has at least one loader display unit (28) which is arranged outside a driver's cab (14) of the commercial vehicle (10), preferably visible to a loader loading the body (16).

6. The commercial vehicle (10) according to claim 5, wherein:
the at least one loader display unit (28) is in communication connection with the body interface (26) for receiving the measurement signals of the plurality of weight measurement sensors (18).

7. The commercial vehicle (10) according to claim 5 or claim 6, wherein:
a plurality of distributed loading display units (28) are provided, which preferably each indicate a loading state of an associated section of the body (16) and/or each display loading states of a plurality of associated sections of the body (16); or
a loader display unit (28) is provided, which preferably indicates loading states of a plurality of, or of all, sections of the body (16).

8. The commercial vehicle (10) according to one of claims 5 to 7, wherein
the body (16) is a closed body, preferably a box body and/or a tarpaulin body with a fixed ceiling, and the at least one loader display unit (28) is arranged on a ceiling of the body (16); or
the body (16) is a body covered with a tarpaulin, preferably a flatbed body with the tarpaulin, and the at least one loader display unit (28) is arranged on bows of the body and/or supporting elements of a body cover, preferably so as to be visible from the inside and, when the tarpaulin is folded up and/or removed, from the outside; or
the body (16) is an open body, preferably a tipper and/or a dump body, and the at least one loader display unit (28) is arranged on both longitudinal outer sides of the body (16); or
the body (16) is an open body, preferably a flatbed body and/or a platform body, and the at least one loader display unit (28) is arranged on a body end wall of the body (16) and/or an outer rear wall of a driver's cab (14) of the commercial vehicle (10); or
the body (16) is an open multi-level body, preferably a vehicle transporter body, and the at least one loader display unit (28) is arranged for each level inside on body parts and/or on holders at eye level height for the loader sitting in the vehicle to be loaded; or
the body (16) is a closed body, preferably a tank and/or silo body, and the at least one loader display unit (28) is arranged on both longitudinal outer sides of the body (16) and/or on a filler opening of the body.

9. The commercial vehicle (10) according to one of claims 5 to 8, wherein:
the at least one loader display unit (28) is arranged on the outside and/or visible from the outside of the commercial vehicle (10), preferably the body (16).

10. The commercial vehicle (10) according to one of the preceding claims, wherein:
the display device (24, 28) has a, preferably high-resolution, driver's cab display unit (24) arranged in a driver's cab (14) of the commercial vehicle (10), and preferably:
the display device (24, 28) has both the at least one loader display unit (28) and the driver's cab display unit (24).

11. The commercial vehicle (10) according to one of the preceding claims, further comprising:
a processing unit (22) configured to receive the measurement signals from the plurality of weight measurement sensors (18) and to output output signals to the display device (24, 28), wherein the processing unit (22) compares the measurement signals with a predetermined legally permissible limit value and outputs a corresponding output signal to the display device (24, 28).

12. The commercial vehicle (10) according to claim 11, wherein:
the processing unit (22) additionally compares the measurement signals from the plurality of weight measurement sensors (18) with a predetermined technically permissible limit value, which is higher than the legally permissible limit value, and outputs a corresponding output signal to the display device (24, 28), and preferably:
the processing unit (22) additionally compares the measurement signals from the plurality of weight measurement sensors (18) with a further predetermined technically permissible limit value, which is higher than the technically permissible limit value, and outputs a corresponding output signal to the display device (24, 28).

13. The commercial vehicle (10) according to one of the preceding claims, wherein:
the image is additionally superimposed by auxiliary lines for the sections and, particularly preferably, colour information for the respective sections is superimposed.

14. The commercial vehicle (10) according to one of the preceding claims, wherein:
the determined loading states are each represented by a combination of a number of illuminated light symbols and a colour of the illuminated light symbols on the display device (24, 28).

15. The commercial vehicle (10) according to one of the preceding claims, further comprising:
a trailer and/or semi-trailer interface (29) for receiving weight measurements of a load on a trailer or semi-trailer for display on the display device (24, 28); and/or
a communication interface (31) for communicating with an external computer system, preferably a fleet management system, for transmitting the determined loading states and/or the determined centre of gravity and/or the determined axle loads.

## Revendications

1. Véhicule utilitaire (10), de préférence un camion, comportant :
une structure (16) destinée à charger une cargaison ;
un cadre de véhicule principal (12), sur lequel une pluralité de capteurs de mesure de poids (18) sont pré-montés et disposés de manière répartie pour mesurer le poids de différentes portions de la structure (16), la structure (16) étant ensuite placée sur le cadre de véhicule principal (12) avec la pluralité pré-montée de capteurs de mesure de poids (18) ; et
un module d'affichage (24, 28) destiné à afficher des états de charge des différentes portions de la structure (16), lesquels sont déterminés par des mesures de poids de la pluralité de capteurs de mesure de poids (18) et/ou un centre de gravité de charge d'une charge de la structure (16), lequel est déterminé par des mesures de poids de la pluralité de capteurs de mesure de poids (18) et/ou de charges d'essieu du véhicule utilitaire (10), lesquelles sont déterminées par des mesures de poids de la pluralité de capteurs de mesure de poids (18) ;
**caractérisé par** :
un dispositif de caméras (30) qui est disposé de manière à capturer les différentes portions de la structure (16) ;
le module d'affichage (24, 28) superposant les états de charge déterminés des différentes portions de la structure (16) en correspondance avec les différentes portions dans une capture, de préférence une capture en temps réel, du dispositif de caméras (30) et/ou superpose le centre de gravité déterminé d'une capture, de préférence une capture en temps réel, du dispositif de caméras (30).

2. Véhicule utilitaire (10) selon la revendication 1,
la pluralité de capteurs de mesure de poids (18) étant pré-montés sur le cadre de véhicule principal (12) indépendamment de la structure afin d'être utilisés avec un grand nombre de structures différentes en vue du placement ultérieur sur le cadre de véhicule principal (12) ; et/ou
la structure (16) étant choisie dans un groupe comprenant une pluralité de structures, de préférence de types de structure différents, comprenant par exemple au moins une structure ouverte et au moins une structure fermée, la pluralité de structures étant conçue pour être placée sur le cadre de véhicule principal (12) et pour être utilisée avec la pluralité de capteurs de mesure de poids (18).

3. Véhicule utilitaire (10) selon la revendication 1 ou la revendication 2,
la pluralité de capteurs de mesure de poids (18) étant disposée au niveau de points de liaison du cadre de véhicule principal (12) à la structure (16), de préférence au moins au niveau de quatre points d'angle extérieurs d'une liaison de la structure (16), par exemple au niveau d'au moins six points de liaison.

4. Véhicule utilitaire (10) selon l'une des revendications précédentes, comportant en outre :
une interface de structure électrique ou électronique (26) en liaison de communication avec la pluralité de capteurs de mesure de poids (18) afin de fournir les signaux de mesure de la pluralité de capteurs de mesure de poids (18) au moyen de l'interface de structure électrique ou électronique (26) .

5. Véhicule utilitaire (10) selon l'une des revendications précédentes,
le module d'affichage (24, 28) comportant au moins une unité d'affichage de chargeur (28) qui est disposée à l'extérieur d'une cabine de conducteur (14) du véhicule utilitaire (10), de préférence visible par un chargeur chargeant la structure (16).

6. Véhicule utilitaire (10) selon la revendication 5,
l'au moins une unité d'affichage de chargeur (28) étant en liaison de communication avec l'interface de structure (26) afin de recevoir les signaux de mesure de la pluralité de capteurs de mesure de poids (18).

7. Véhicule utilitaire (10) selon la revendication 5 ou la revendication 6,
plusieurs unités d'affichage de chargeur (28) disposées de manière répartie étant prévues qui affichent de préférence chacune un état de charge d'une portion associée de la structure (16) et/ou chacune des états de charge de plusieurs portions associées de la structure (16) ; ou
une unité d'affichage de chargeur (28) étant prévue qui affiche de préférence les états de charge de plusieurs portions de la structure (16) ou de la totalité de celles-ci.

8. Véhicule utilitaire (10) selon l'une des revendications 5 à 7,
la structure (16) étant une structure fermée, de préférence une structure à coffre et/ou une structure bâchée comprenant un plafond fixe, et l'au moins une unité d'affichage de chargeur (28) étant disposée sur un plafond de la structure (16) ; ou
la structure (16) étant une structure recouverte d'une bâche, de préférence une structure de plate-forme pourvue de la bâche, et l'au moins une unité d'affichage de chargeur (28) étant disposée sur des arceaux de la structure et/ou des éléments porteurs d'une couverture de structure, de préférence pour être visible de l'intérieur et de l'extérieur lorsque la bâche est repliée et/ou retirée ; ou
la structure (16) étant une structure ouverte, de préférence une structure à benne basculante et/ou une structure à benne fixe, et l'au moins une unité d'affichage de chargeur (28) étant disposée sur les deux côtés extérieurs longitudinaux de la structure (16) ; ou
la structure (16) étant une structure ouverte, de préférence une structure à plateau et/ou une structure à plate-forme, et l'au moins une unité d'affichage de chargeur (28) étant disposée sur une paroi de structure frontale de la structure (16) et/ou une paroi arrière extérieure d'une cabine de conducteur (14) du véhicule utilitaire (10) ; ou
la structure (16) étant une structure ouverte à plusieurs étages, de préférence une structure de transport de véhicules, et au moins une unité d'affichage de chargeur (28) par étage étant disposée à l'intérieur au niveau d'éléments de structure et/ou de supports au niveau des yeux du chargeur assis dans le véhicule à charger ; ou
la structure (16) étant une structure fermée, de préférence une structure à réservoir et/ou à silo, et l'au moins une unité d'affichage de chargeur (28) étant disposée sur les deux côtés extérieurs longitudinaux de la structure (16) et/ou au niveau d'une ouverture de remplissage de la structure.

9. Véhicule utilitaire (10) selon l'une des revendications 5 à 8,
l'au moins une unité d'affichage de chargeur (28) étant disposée à l'extérieur et/ou de manière visible de l'extérieur sur le véhicule utilitaire (10), de préférence sur la structure (16).

10. Véhicule utilitaire (10) selon l'une des revendications précédentes,
le module d'affichage (24, 28) comportant une unité d'affichage de cabine de conducteur (24), de préférence à haute résolution, disposée dans une cabine de conducteur (14) du véhicule utilitaire (10), et de préférence :
le module d'affichage (24, 28) comportant aussi bien l'au moins une unité d'affichage de chargeur (28) que l'unité d'affichage de cabine de conducteur (24).

11. Véhicule utilitaire (10) selon l'une des revendications précédentes, comportant en outre :
une unité de traitement (22) qui est conçue pour recevoir les signaux de mesure de la pluralité de capteurs de mesure de poids (18) et pour délivrer des signaux de sortie au module d'affichage (24, 28), l'unité de traitement (22) comparant les signaux de mesure à une valeur limite prédéterminée légalement admissible et délivrant un signal de sortie correspondant au module d'affichage (24, 28).

12. Véhicule utilitaire (10) selon la revendication 11,
l'unité de traitement (22) comparant en outre les signaux de mesure de la pluralité de capteurs de mesure de poids (18) à une valeur limite techniquement admissible prédéterminée qui est supérieure à la valeur limite légalement autorisée, et délivrant un signal de sortie correspondant au module d'affichage (24, 28), et de préférence :
l'unité de traitement (22) comparant en outre les signaux de mesure de la pluralité de capteurs de mesure de poids (18) à une autre valeur limite techniquement admissible prédéterminée qui est supérieure à la valeur limite techniquement admissible, et délivrant un signal de sortie correspondant au module d'affichage (24, 28).

13. Véhicule utilitaire (10) selon l'une des revendications précédentes,
la capture étant en outre recouverte des lignes auxiliaires pour les portions et, de manière particulièrement préférée, des informations de couleur étant incluses qui sont destinées aux portions respectives.

14. Véhicule utilitaire (10) selon l'une des revendications précédentes,
les états de charge déterminés étant représentés chacun par une combinaison d'un certain nombre de symboles lumineux qui s'allument et d'une couleur des symboles lumineux qui s'allument sur le module d'affichage (24, 28).

15. Véhicule utilitaire (10) selon l'une des revendications précédentes, comprenant en outre :
une interface de remorque et/ou de semi-remorque (29) destinée à recevoir des mesures de poids d'une charge sur une remorque ou semi-remorque en vue de l'affichage sur le module d'affichage (24, 28) ; et/ou
une interface de communication (31) destinée à communiquer avec un système informatique externe, de préférence un système de gestion de flotte, afin de transmettre les états de charge déterminés et/ou le centre de gravité déterminé et/ou les charges d'essieu déterminées.
